Europäisches Patentamt

European Patent Office

Office européen des brevets

(19)

(11) Publication number: **0 056 297**
**A2**

(12)

# EUROPEAN PATENT APPLICATION

(21) Application number: **82300017.9**

(22) Date of filing: **05.01.82**

(51) Int. Cl.³: **G 01 S 13/76**

(30) Priority: **08.01.81 GB 8100529**

(71) Applicant: **THE MARCONI COMPANY LIMITED, Marconi House New Street, Chelmsford Essex CM1 1PL (GB)**

(43) Date of publication of application: **21.07.82 Bulletin 82/29**

(72) Inventor: **Briggs, John Nigel, 20, Kirby Lane, Kirby Muxloe Leicester LE3 3JG (GB)**

(84) Designated Contracting States: **CH DE FR IT LI NL SE**

(74) Representative: **Hoste, Colin Francis et al, Marconi House New Street, Chelmsford Essex CM1 1PL (GB)**

(54) **A navigation radar system.**

(57) The invention relates to a navigation radar system in which a secondary radar responder provides a reply in response to an interrogation radar signal received from a primary radar transmitter. The frequency of the received radar signal is monitored by the responder and the response is transmitted at a frequency which is off-set from that of the interrogation signal so that the response can be received by the primary radar and distinguished from primary radar echoes.

CONTROL UNIT 66
53 ROTATING SCANNER
50
LINE OF SIGHT
51
56 ANTENNA, OMNIDIRECTIONAL OR OTHERWISE
SUPERHETERODYNE RECEIVER
57 CIRCULATOR, ETC.
LOCAL OSCILLATOR 59
58 MIXER
TUNE
63 PULSE TRANSMITTER
a b c
RECEIVER
TRANS-MITTER 52
AMPLIFIER 60
PULSE CODE GENERATOR
54
55 DISPLAY
(SEE TYPICAL PRESENTATIONS BELOW)
DETECTOR 61
65
FREQ CONTROL CCT. 64
62
a. RADAR MODE b. BEACON MODE c. MIXED MODE
FREQ DISCRIM-INATOR

RADAR

BEACON

LAND OTHER SHIP X

a. RADAR MODE b. BEACON MODE (BEACON AT 'X') (cı) MIXED MODE 1. RADAR SCAN (ALTERNATE SWEEP) 2. BEACON SCAN (cıı) MIXED MODE (ALTERNATE PULSE)

## A navigation radar system

This invention relates to navigation radar systems in which secondary radar responders provide a reply in response to a radar signal transmitted by a primary radar transmitter, so that the response can be used in combination with or in addition to the normal radar echoes to assist navigation. Radar signals transmitted by a primary radar are used to interrogate a responder, which sends a reply back to the primary radar equipment if it is able to respond to the interrogation radar signals. The interrogation radar signals trigger the operation of the responder and when the reply is received at the primary radar, the range of the responder can be deduced from the delay occurring between the transmission of the interrogation radar signal and the receipt of the response. The interrogation signal is in pulsed form, so the response can be received in the intervals between the pulses. The pulse repetition frequency and duration of the interrogation pulses are therefore selected in accordance with the required maximum range of the radar system. In practice, the apparent range when measured as time delay from interrogation to start of response is slightly greater than the true range since the responder takes a finite time to react to the interrogation radar signal and transmit its response, but this delay is known and can be allowed for. In addition, a conventional radar echo is likely to be returned from the structure of the responder, thereby allowing the true range to be directly determined. The direction of the responder corresponds to the angular orientation of the radar boresight when the interrogation radar signals are transmitted, the boresight being arranged to rotate continually in azimuth about the location of the primary radar.

Radar responders are increasingly being used as beacons for marine purposes. They may be used as navigational aids, such as for marking marine navigational stations, e.g. a lighthouse, in which case the responder is termed a racon. Alternatively, they may be used aboard ships to indicate their location, in which case they are generally termed transponders. A radar responder is arranged to provide a response signal to an interrogation pulse transmitted by a conventional primary radar. The response which is transmitted by the responder is received by the primary radar so that the position of the responder can be marked on the visual radar display of the primary radar, and/or used for the processing of data relating to the responder station, such data being displayed on the primary radar display or an auxiliary display in digital or alpha-numeric form.

It has been customary for the response signal to be received by the primary radar in combination with the conventional echo returns so that both can be displayed in a convenient manner on a conventional display, such as a p.p.i. display. In this way responses from secondary radar responders are superimposed on a plan showing nearby coastal features and other ships. However, information relating to the secondary radar responder may overlie or obscure other ships or alternatively the information relating to the secondary radar responder may be lost in a background of sea or other clutter making the display difficult to read and interpret. The present invention seeks to provide an improved navigation radar system in which radar echo returns and responses from secondary radar responders can be independently and selectively displayed for presentation to an operator as required.

According to a first aspect of this invention, a navigation radar system includes a primary radar for transmitting a pulsed radar signal and for receiving echoes therefrom, and for displaying information relating to the received echoes; a secondary radar responder having means for receiving said pulsed radar signal as an interrogation signal, and a responder transmitter for sending a response thereto at a frequency which is related to the frequency of said pulsed radar signal, but which differs therefrom by a frequency off-set; the primary radar also including means for receiving said response and for displaying information relating thereto separately from said information relating to the received echoes.

Preferably the information relating to the received radar echoes is displayed in spatial registration with the information from the secondary radar responder whether displayed separately or simultaneously.

The off-set frequency is sufficiently great so as to enable the response from the secondary radar responder to be distinguished from conventional radar echoes on the basis of frequency alone. Thus by the appropriate use of frequency selective circuits, the two kinds of radar return can be displayed separately, sequentially or in combination as required.

According to a second aspect of this invention, a secondary radar responder for use in said navigation radar system includes means for receiving an interrogation pulsed radar signal, and means for transmitting a pulsed response thereto at a frequency which is related to the frequency (which may vary) of said interrogation signal, but which differs therefrom by a frequency off-set.

Preferably the frequency of said response is controlled so as to differ from the frequency of the interrogation signal by a predetermined frequency off-set value.

According to a third aspect of this invention, a primary radar for use in said navigation radar system includes means for transmitting a pulsed radar signal and receiving echoes therefrom, and for displaying information relating to the received echoes; the primary radar further including means for receiving a response from a secondary radar responder at a frequency which is off-set from the frequency of the transmitted pulsed radar signal and for displaying information relating to the response separately of said information relating to the received echoes. A plurality of ship borne primary radars may concurrently interrogate a given secondary radar responder and each of the primary radars is able to select the mode in which received information is displayed. For example, the conventional radar passive echoes can be displayed alone to the exclusion of responses obtained from secondary radar responders. Alternatively, the response can be displayed alone, but this is preferred for only short periods of time because in the absence of background echo information, it may be difficult to relate the position of the responder to the scene under surveillance and moreover the radar operator will not be aware of radar targets, such as neighbouring ships, which may present a collision threat. Preferably, therefore, both radar passive echoes and responses from secondary radar responders are displayed concurrently in a manner which enables each to be viewed with optimum clarity. Thus, radar echoes can be displayed on one scan of the radar with responses being displayed on the next scan in a continuing alternating sequence. Alternatively, echoes could be displayed after one interrogation pulse with responses being displayed after the second interrogation pulse and so on alternately. It is envisaged that in normal operation, the mode in which both kinds of return can be displayed concurrently will be selected. However, if a radar operator wishes to study the response in more detail (for example, to read the response code of a faint or distant beacon so as to enable the beacon to be identified) the appropriate mode could be selected so that normal radar passive echoes were not displayed. Once the position and identity of a beacon has been established, it may be preferable in some circumstances to switch to the mode in which only normal radar passive echoes are displayed.

Although it is known to provide a secondary radar responder which provides a response at a fixed predetermined frequency which is necessarily different from the frequency of the interrogation signals, serious difficulties are introduced. The difference in frequency of the fixed frequency response from the interrogation signal varies from radar to radar depending on particular transmitter frequencies. In order to reduce mutual interference, it is desirable for radar interrogation frequencies to be spready uniformly through the allocated band. This presents the difficulty that primary radars transmitting near the beacon response frequency may have insufficient receiver selectivity so that response signals cannot be displayed separately or independently of primary radar echo returns. Conversely, radars operating at frequencies remote from the fixed response frequency may suffer serious loss of signal reception sensitivity at the fixed beacon frequency. This is because the kind of slotted waveguide antennas which are often used for marine radars suffer from a problem which is usually termed antenna squint - that is to say, the electrical axis of the antenna differs from the true boresight direction of the antenna by an angle which is frequency dependent. This is of no consequence when the radar response is at the same frequency as the transmitted interrogation frequency, but when the response frequency and the transmitted frequency are different, there may be a serious loss of sensitivity if the frequencies differ so much that the squint angle exceeds the antenna beam width.

The invention is further described by way of example with reference to the accompanying drawings in which,

Figure 1 illustrates in diagrammatic form a navigation radar system in accordance with the first aspect of this invention,

Figure 2 illustrates a responder forming part of the system,

Figure 3 shows a part of the responder in greater detail,

Figure 4 is an explanatory diagram relating to the operation of the responder,

Figure 5 shows a responder modified to operate in an alternative mode to that shown in Figure 2,

Figure 6 shows part of a primary radar forming part of the navigation radar system, and

Figure 7 shows a modified primary radar.

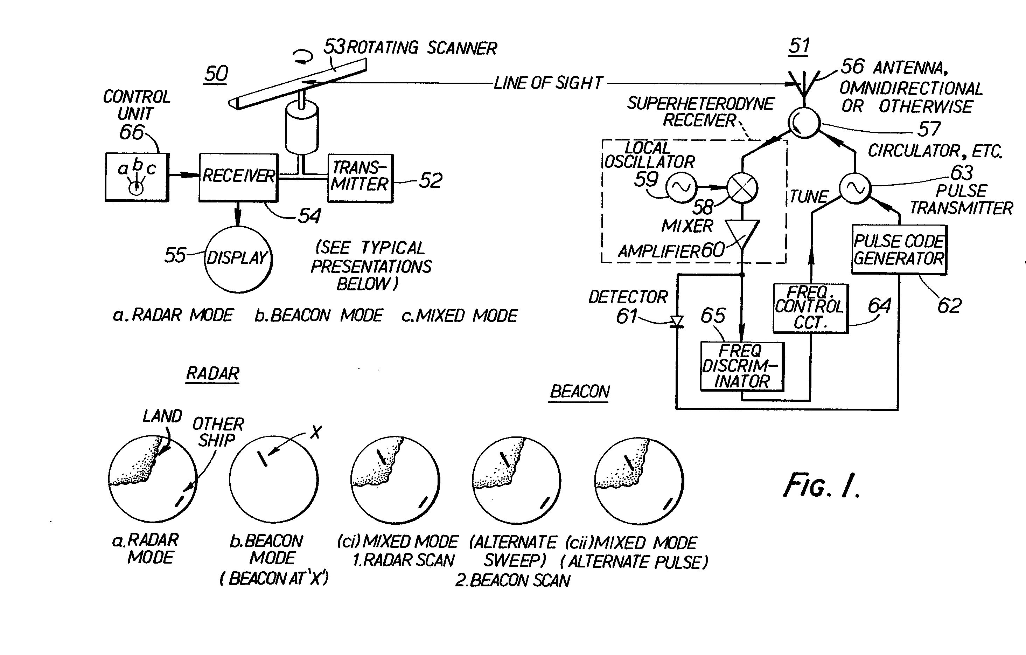

Referring to Figure 1, the navigation radar system comprises a primary radar 50 and a secondary radar responder 51. The primary pulsed radar 50 is carried by a ship in order to assist its navigation. It is capable of operating as a conventional primary radar in which transmitted signals are reflected by objects which they intercept, with the reflected echoes being returned to the radar, so that signals derived from the echoes can be displayed on a suitable screen to enable an operator to see the nature and position of the objects. Typically, echoes would be returned by nearby coastal lines, harbour installations, large buildings on the foreshore and neighbouring vessels, in addition to the inevitable sea clutter returns which appear as unwanted signals on the display. The transmitted radar signals are also received by secondary radar responders in the vicinity of the primary radar transmitter and it is arranged that each responder transmits a response signal when it detects a primary radar signal. The response signal is generally coded or 'labelled' so as to enable the identity of the responder to be determined. The response frequency must, of course, be within a reception bandwidth of the radar so that it can be processed by the radar receiver. The secondary radar responder is arranged to transmit a response signal having a frequency which is off-set from that of the transmitted primary radar signal by an amount which permits the response to be readily separated from echo signals at the radar receiver. This enables primary radar information to be processed and displayed separately from the secondary radar information if desired. Under conditions of severe clutter, for example, it can be very difficult to identify beacon signals on a display and the facility of enabling only responder signals to be displayed in the absence of primary radar echoes and clutter enables the responders to be more clearly identified and their identification labels read more easily. Conversely, a responder label presented on a display screen may obscure a nearby vessel making it difficult to detect the vessel and to take collision avoidance manoeuvres if necessary.

The primary radar and the second radar responder are described in greater detail subsequently. Figure 1 illustrates the system in a simplified diagrammatic form.

Referring to Figure 1 in more detail, the primary radar 50 contains a transmitter 52 which is controlled so as to transmit a high energy radar pulse at predetermined regular intervals. Typically, the radar transmits between 1000 and 3400 pulses per second by gating on and off a high frequency carrier signal which is typically in the range 9320 MHz to 9500 MHz. This is a frequency band which is currently allocated for marine navigation purposes. The pulsed signals generated by the transmitter 52 are radiated by a radiating antenna 53, which rotates in azimuth at a relatively slow rate. Echoes received from targets upon which the transmitted radar signals are incident, are received at the antenna 53 and routed to a receiver 54 during the quiet intervals following the cessation of the preceding transmitted pulse. The receiver 54 extracts useful information from the echoes and presents that information to a display 55 so that the information can be seen by an operator.

The pulses transmitted by the primary radar 50 are also received by all secondary radar responders 51 within range and the received signal is fed via an omni-directional antenna 56, and via a circulator 57 to a mixer 58 where it is mixed with a signal from a local oscillator 59 to produce a lower intermediate frequency which is amplified by an i.f. amplifier 60. The mixer 58, the local oscillator 59 and the amplifier 60 comprise a superheterodyne receiver. The intermediate frequency is detected at a detector 61 which energises a pulse code generator 62 which generates a code sequence which uniquely identifies the particular responder being interrogated. The code sequence enables a pulse transmitter 63 which transmits at the required carrier frequency the pulse code so generated. The output of the transmitter 63 is routed in conventional fashion via the circulator 57 and the antenna 56, where it is radiated so that the code response can be received by the primary radar 50. The carrier frequency at which the pulse transmitter 63 operates is determined by a frequency control circuit 64. The intermediate frequency provided at the output of amplifier 60 is directly related to the transmission frequency of the primary radar 50 and its frequency value is determined by the frequency discriminator 65. This frequency value is received by the frequency control circuit 64, which tunes the carrier frequency of the pulse transmitter 63 so that the frequency of the response signal is off-set from the received frequency by a predetermined amount, which enables the primary radar 50 to distinguish responses of the secondary radar responder from passive echoes. The receiver 54 of the primary radar 50 is controlled by a control unit 66 so that the display 55 can operate in any one of three modes. These three modes consist of radar mode A in which only normal radar passive echoes are displayed, beacon mode B in which only responses from the secondary radar responder are displayed and mixed mode C in which both passive echoes and secondary radar responses are displayed in a combined manner. In the mixed mode C, passive echoes and beacon responses can be displayed on alternate scans, or alternatively echoes can be displayed after one interrogation pulse and beacon responses after the second interrogation pulse and so on alternately.

It is envisaged that in normal operation of the navigation radar system, mixed mode C would usually be selected. If the radar operator or navigator wished to study beacon responses in more detail (for example, to read the response code of a faint or distant beacon), beacon code B could be selected temporarily. It would be advisable to provide some form of warning to prevent continued use of beacon mode B as under these circumstances normal radar targets are not displayed.

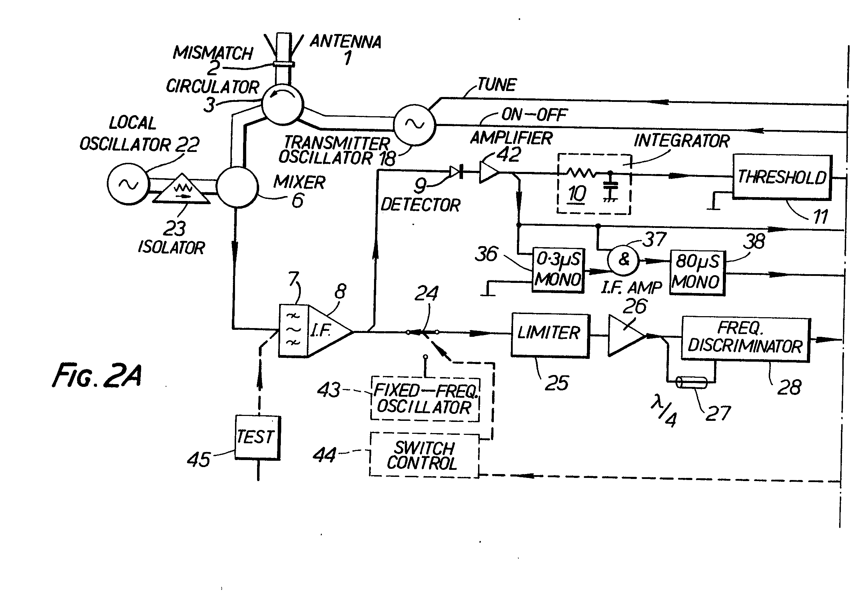

An example of a responder is shown in Figure 2. Incoming interrogation signals are received at an omni-directional antenna 1 and are routed via a mis-match 2 in a waveguide feed to a circulator 3. The circulator 3 directs received signals to a mixer 6, which also receives a signal from a local oscillator 22 via a directional isolator 23. In the present example it is assumed that the frequency provided by the oscillator 22 is constant and is either 9270 MHz or 9550 MHz approximately. An I.F. difference frequency is provided by the mixer 6 in the conventional manner, and this is amplified by a wide band amplifier 8, which contains a bandpass filter 7 extending from 50 MHz to 230 MHz. The output of the amplifier 8 is fed to an amplitude limiter 25 which forms part of a frequency control loop, and also to a detector 9 which forms part of a response loop.

The detector 9 extracts a video signal from the received interrogation signal. The frequency of the received interrogation signal lies in the frequency band of 180 MHz, which extends from 9320 MHz to 9500 MHz. The interrogation signal in fact constitutes the normal pulsed transmission of a primary radar. Typically, a marine radar works at 1000 to 3400 pulses per second, each pulse having a width of from 0.05 µS to 2 µS. The pulse width is a function of the working range scale which is selected by a radar operator, and increases as longer ranges are selected. In this case the video signal derived by the detector 9 comprises the rectified envelope of the pulse waveform. This signal is passed through a video amplifier 42 to an integrator 10, which comprises a resistor/capacitor network having a time constant of 0.4 µS, to a threshold circuit 11. The function of the integrator 10 is to attenuate the amplitude of short pulse signals, so that background noise and feeble short pulses from distant radars do not needlessly trigger the responder. The threshold circuit 11 is provided with an input having a predetermined threshold value, so that only signals having an energy which exceed this threshold level are passed on to a following response code generator comprising a clock 14 and shift register 15. In this way noise signals are rejected and the output of the threshold circuit 11 exhibits a low false alarm rate. This means that when an output is provided, it is almost certainly in response to a genuine interrogation signal, which may be a strong short pulse or a more feeble long pulse.

Interrogation signals strongenough to cross the threshold of the threshold circuit 11 (typically set so as to correspond to -78 dBW at the antenna 1) trigger a response code generator, which comprises an 80 µS monostable 13, a clock 14 and a shift register 15. The response code generator is such as to produce an appropriate sequence of pulses which uniquely identifies the responder. When the monostable 13 is initially triggered, the clock 14 is enabled and this runs at a pre-set rate (typically 1 MHz) and drives the shift register 15. Typically, the shift register 15 contains sixteen discrete bits and according to whether the individual bits of the registers are set to a logic 0 level or a logic 1 level, a train of corresponding digital binary pulses is provided at the output of the register 15. For example, if stages 1, 2, 3, 5, 7 and 9 of the register 15 are set to provide a logic 1 level and all of the remaining stages are set to produce a logic 0 level, the morse letter B, which comprises the pulse sequence long-short-short-short is obtained serially at the output of the shift register 15. This pulse train is passed through a voltage clipper 16 to give a fixed definite height to the pulses and these pulses are amplified in a power amplifier 17. The amplifier 17 controls a variable frequency Gunn transmitter oscillator 18, such as to key the oscillator on and off in accordance with the pulse train applied to it. The frequency of oscillation of the transmitter oscillator 18 is determined by the level of a control signal applied to it from an amplifier 35, which forms part of the frequency control loop. The way in which the frequency of the oscillator is determined is described subsequently.

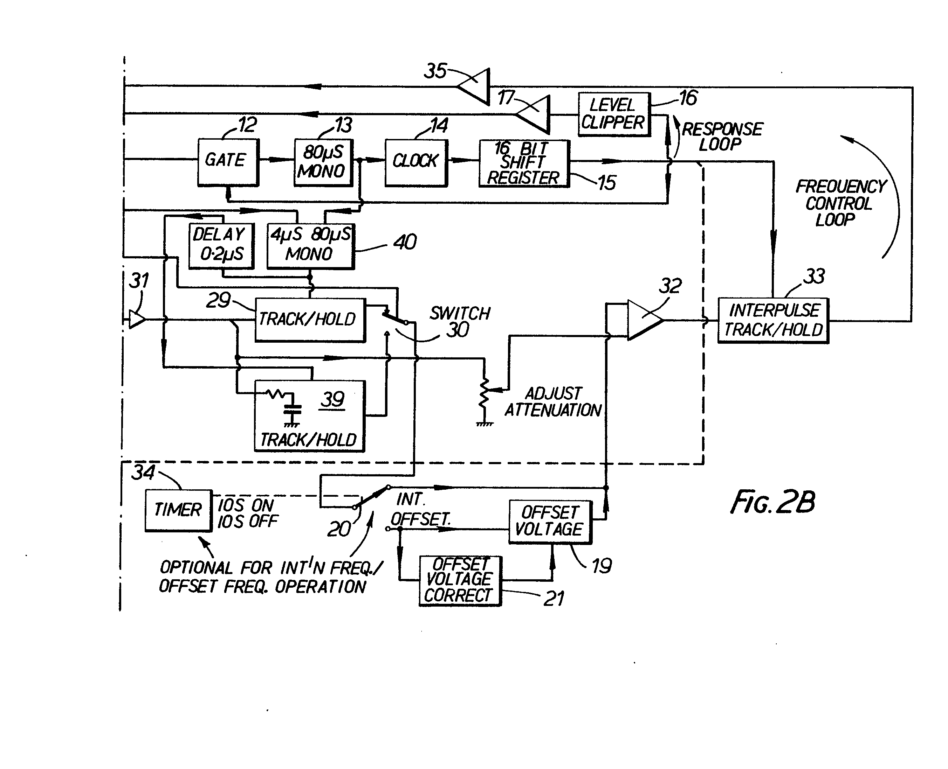

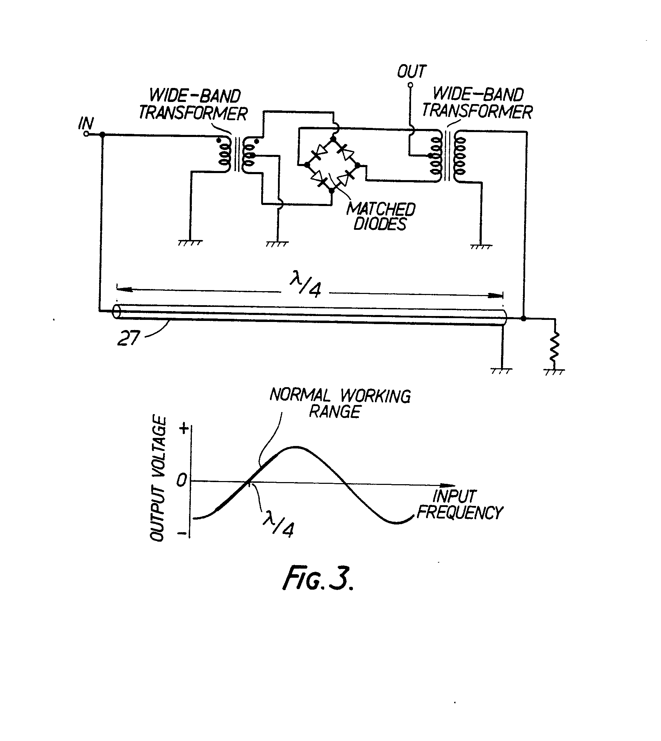

As previously mentioned, the intermediate frequency signal from the amplifier 8 is applied to a limiter 25. The limiter 25 is followed by a further I.F. amplifier 26 and the output amplitude of this amplifier is independent of interrogation frequency or amplitude provided that the received interrogation signal is within the band 9320 MHz to 9500 MHz and is sufficiently strong to trigger the responder, i.e. strong enough to exceed the threshold set by the threshold circuit 11. The amplifier 26 drives a frequency discriminator 28, which operates in conjunction with a quarter wavelength line 27. The line 27 introduces a quarter wavelength delay at the I.F. centre frequency (140 MHz in this example) and at this frequency the frequency discriminator gives zero output. The frequency discriminator is shown in greater detail in Figure 3 and it can be seen that within the normal working frequency range, the amplitude and polarity of the output signal are indicative of the applied intermediate frequency.

The output of the frequency discriminator 28 is fed via a video amplifier 31 to a track and hold circuit 29. The track and hold circuit 29 is such as to continuously follow the variations in the d.c. level of the signal provided by the frequency discriminator 28 and to store the value present at the instant when a strobe signal is applied to it. The strobe signal is obtained from the detector 9 via a monostable 40 having periods of 4 μS and 80 μS. The monostable 40 provides a strobe signal having an initial width of approximately 4 μS which serves to store the output of the frequency discriminator 28, which is representative of the interrogation frequency, for the period of 4 μS. The input to the monostable 40 is not taken from the output of the amplifier 42, even though a low false alarm rate signal is present at that point, because the inherent time delay produced by the integrator 10 would give timing errors.

In the event of the response transmitter firing, an output from monostable 13 extends the output pulse of monostable 40

0056297

for 80 µS total time. This enables the frequency discriminator output signal to be held by the track and hold circuit 29 for a relatively long period. It should be noted the threshold circuit 11 provides an output to trigger the monostable 40 only if the interrogation signal is sufficiently strong to exceed its threshold. The frequency information is extracted from short interrogation pulses received at the antenna 1, before it is possible to determine whether their strength or duration is sufficient to constitute a valid interrogation signal.

The signal held in the track and hold circuit 29 is used to tune the frequency of the transmitter oscillator 18. At the instant the oscillator is fired by the pulsed output of amplifier 17 its frequency may be anywhere in the allowable frequency band, which in this example, extends from 9320 MHz to 9500 MHz. When the transmiter oscillator provides a pulsed output when the response code is applied to it from the amplifier 17, the response is transmitted by the antenna 1, but at this stage its frequency is incorrect. A sample (which is of a larger amplitude than likely interrogations) of the output power is fed to the mixer 6 by reflection from the mismatch 2 in the antenna feed. This sample is amplified by the amplifiers 8 and 26 and processed by the frequency discriminator 28, whose output is now a measure of the transmitted response frequency. The sample is also detected by the detector 9 but it does not interfere with the operation of the code generator, since the gate 12 preceding monostable 13 is opened when the transmitter fires.

Since the sample is of a larger amplitude than likely interrogations the amplifier 8 is arranged to limit thereby eliminating any interrogation signals wheich may be present.

The output of the frequency discriminator 28 is fed
directly to one input of a differential amplifier 32, the other
input of which is received from the track and hold circuit 29
eitherdirectly or via an off-set voltage generator 19 depending
on the connection provided by a periodically operated switch 20.
The voltage held in the generator 19 represents the frequency off-
set value, typically 40 to 50 MHz, by which the response frequency is required to differ from the interrogation frequency.
The off-set voltage corrector 21 compensates forthe nonlinearity of the detector characteristic shown in Figure 3 - the
compensation needed is a function of interrogation frequency
and the corresponding magnitude of compensation needed is
therefore a function of the voltage held in the track and
hold circuit 29. The selected compensation is combined with
the output of the off-set voltage generator and applied to the
differential amplifier 32 to complete the feedback loop which
causes the frequency of the transmitter oscillator 18 to
transmit the response signal at the correctoff-set frequency.
The frequency transmitted is off-set whilst the output of the
track and hold circuit is routed to the off-set voltage generator
19 by the switch 20. However, it may be desirable for the responder
to be capable of transmitting its response at the same frequency
as the interrogation signal, as only suitably modified primary
radars will be able to received responses at the off-set
frequencies, whereas all radars will be able to receive responses at the interrogation frequency, although in this latter
case the response signal cannot be separated from passive
echo signals atthe same frequency. The timer 34 is therefore
provided to regularly operate switch 20 - a switching period
of about 20 seconds would be suitable so that the responder is
able to respond at the interrogation frequency for a period of
10 seconds, followed by a period of 10 seconds when the
interrogation frequency modified by the off-set frequency is
provided. The amplifier 32 therefore provides an output which
represents, in voltage form, the difference between the
interrogation frequency and the response frequency as
modified by the off-set frequency value. This value is held in a further track and hold circuit 33, the output of which is strobed by the presence of output pulses at the shift register 15. The signal held in the track and hold circuit 33 is applied via the amplifier 35 to tune the frequency of the oscillator 18 in such a sense as to reduce the difference in frequency between the initial transmission frequency and the required transmission frequency. The track and hold circuit 33 is strobed from the output of the shift register 15 for two reasons. If the coded response which is produced by the shift register 15 and transmitted by the oscillator 18 contains more than a single pulse, and usually it will contain several pulses, the frequency of oscillation is prevented from reverting to one or other of its frequency extremes between pulses. During the intervals between pulses there is only one input to the error amplifier 32 - this is the input from the track and hold circuit 29, and hence the amplifier 32 provides a very large output. Thus the amplifier output is allowed to modify the signal held by the track and hold circuit 33 only whilst the transmitter is providing a pulse output. Additionally, it is statistically fairly probable that a given interrogation signal will be followed by a second interrogation signal from the same primary radar rather than one from another radar. In this case the second interrogation will be replied to initially at a frequency near to the correct frequency, as this has been remembered and retained by the track and hold circuit 33.

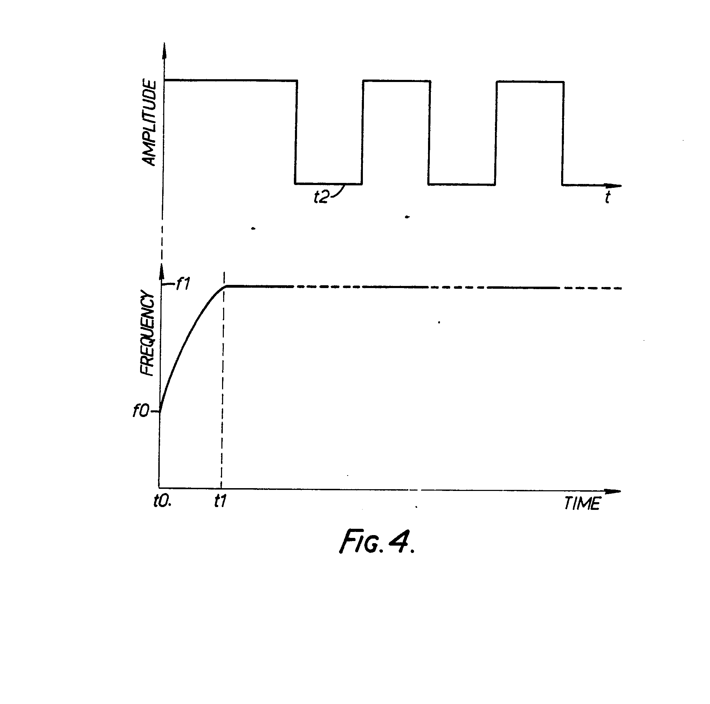

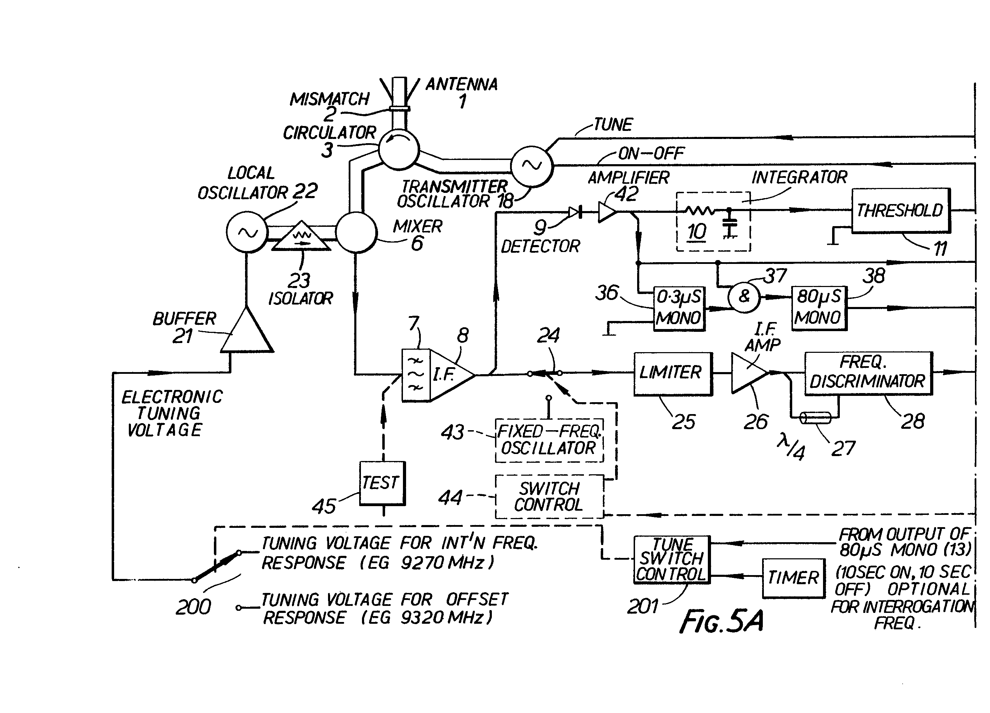

Figure 4 shows one example of a response sequence in relation to the rate at which the oscillator 18 is brought to its correct frequency. In Figure 4, the lower diagram represents the transmission frequency of the oscillator 18 and the upper drawing represents the pulsed output of the oscillator 18 as determined by the contents of the shift register 15. When an interrogation pulse is first received, it is assumed that at time t0 the oscillator 18 is set to oscillate at frequency f0, but it is at frequency f1 that the response should be transmitted. The frequency control loop operates rapidly once the oscillator 18 is triggered to bring the frequency of oscillation towards its correct value and as can be seen, the correct value is reached during the transmission of the first pulse. Preferably the first pulse is a long one, thereby providing ample time for the correct frequency to be achieved. During the intervals t2 between pulses, the strobe signal applied to the track and hold circuit 33 from the shift register 15 ensures that the frequency of oscillation is not changed. At the end of the pulse sequence, the previously transmitted frequency is remembered until it us up-dated by the next interrogation pulse.

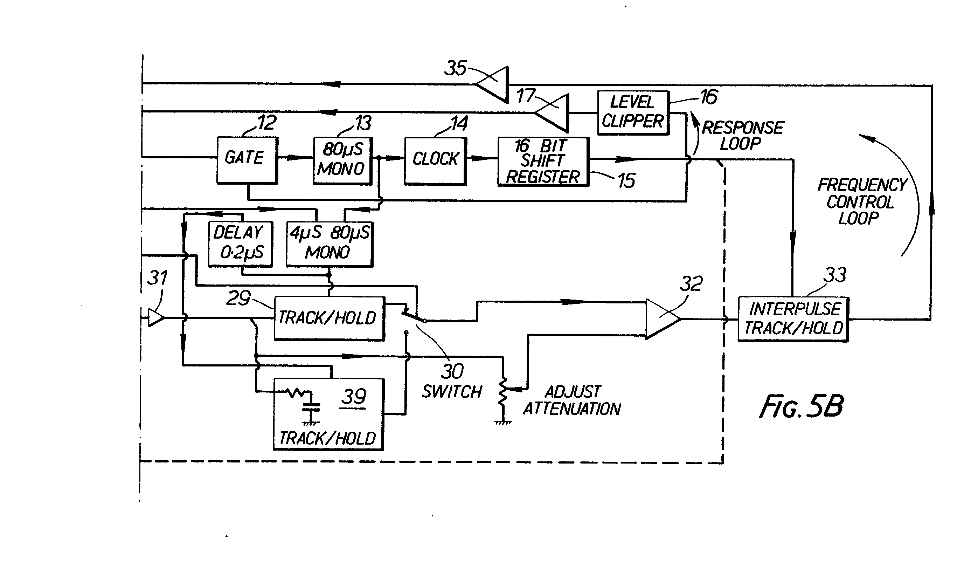

An alternative responder is shown in Figure 5. It differs from that shown in Figure 2 in that the content of the track and hold circuit 29 is not modified when the frequency of the response signal is required to be at the predetermined off-set value relative to the interrogation frequency. Instead the frequency of the local oscillator 22 is altered by 40 to 50 MHz immediately after the reception of a valid interrogation pulse. The oscillator 22 is detuned by the required off-set value by a signal present at terminal 200 which is switched in under the control of a switch control 201 by the presence of an output from the 80 µS monostable 13. When this 80 µS pulse expires the oscillator 22 reverts to its normal value to await reception of the next interrogation signal. The stepping of the output of the oscillator 22 by the off-set frequency causes the feedback loop to stabilise at the interrogation frequency as modified by the off-set value. Thus the transmitter 18 transmits at a response frequency which is off-set from the interrogation frequency.

So that the responder signal can be received by a conventional radar, the frequency feedback loop can be allowed to control the transmitter 18 for a proportion of the total time so that the response is sent at interrogation frequency. This can be achieved by disabling the switch control 201 by a timer which is exactly analogous to timer 34 shown in Figure 2.

This second radar responder has the following important features. The frequency of the local oscillator 22 is itself unimportant providing that it does not shift unwantedly in frequency in the very short time between interrogation and response. Since each interrogation is handled individually by the frequency control loop, the responder can handle a large number of primary radars concurrently. Frequency measurement and tracking accuracy can be made such that the response frequency lies within a typical radar receiver bandwidth of 5 MHz. It should be noted that any frequency drift occurring in the oscillator 18 during the response pulse sequence is automatically corrected by the frequency control loop. When using relatively high power transmitters this is very important. Additionally, any temperature co-efficient of frequency of the response oscillator 18 is also automatically corrected.

In marine applications a primary radar scans in azimuth, whilst transmitting high energy pulses. The rate at which the pulses are transmitted in relation to the radar beamwidth is such that typically a target may receive ten to twenty strikes for each scan in azimuth of the radar. The system as so far described above responds to each strike in each scan, but this is often not desirable as targets in the area of the response "paint" on the visual display of the primary radar would be masked by the response provided by the responder. It is preferable to arrange for the responder to reply to a given radar for a short period and to be quiet for a short period. There are a number of ways in which this latter requirement can be met. For example, the whole responder can be switched off by a timing device in the power supply circuit for those periods when the responder is to be quiet. Alternatively, during the quiet period, the responder can be arranged to transmit continuously, or in response to an interrogation, at a predetermined fixed frequency. In this event, the responder can also be used as a fixed frequency racon apart from the relatively short intervals when its output frequency is arranged to match the interrogation frequency or to differ therefrom by the off-set frequency. When the responder is working in a fixed frequency mode, a crystal controlled oscillator 43 (shown in broken line in Figure 2) injects the frequency into the frequency discriminator 28 via an appropriately set switch 24, the limiter 25 and the I.F.

amplifier 26. The frequency control loop of the responder then ensures that the correct frequency is transmitted, but the oscillator 43 is gated off by a switch control 44 while the transmitter oscillator 18 is actually transmitting.

As described so far, the responder samples the frequency of the interrogation as soon as an interrogation signal is detected. In practice, a negligible delay of about 40 nS may be present, which is determined by circuit design. However, if the interrogation pulse is relatively long, say up to 1 μS, the radar transmitter which transmits the interrogation pulse may not have had time to settle to its final frequency within 40 nS of the commencement of the pulse transmission. Consequently the frequency of the interrogation pulse may initially differ from that frequency of the body of the pulse to which the radar receiver is tuned and this would result in the responder replying at an incorrect frequency. Under this circumstance, the response signal might not be received at the radar, particularly as the radar receiver bandwidth is likely to be low if a longer interrogation pulse is transmitted. The circuit arrangements shown in Figures 2 and 5 include provision for overcoming this difficulty.

The leading edge of the video pulse output of the detector 9 is arranged to additionally trigger a monostable 36, which provides an output pulse having a duration of 0.3 μS. If, and only if, the interrogation pulse is still present at the output of the detector 9 at this time, an AND gate 37 provides an output level which triggers a 80 μS monostable device 38. The monostable 38 provides an output which operates a change-over switch 30, so that the output of the track and hold circuit 29 is not applied to amplifier circuit 32. An additional track and hold circuit 39 is in parallel with the track and hold circuit 29, but its operation is made sluggish by the insertion of a resistance in its input connection, so that the response rate of its holding capacitor is slowed down. The tracking time constant is made about 0.1 μS, so that the output voltage provided by the track and hold circuit 39 is the measure of the frequency occurring during the previous 0.1 μS. If the interrogation pulse is 0.3 μS duration or longer, a voltage is obtained which is representative of the average frequency after about 0.25 μS following receipt of the leading edge of the interrogation pulse and it is this voltage which is fed by switch 30 to the amplifier 32. A further effect of using a slow response track and hold circuit 39 is that its effective noise bandwidth is reduced, thereby making its voltage output less noise dependent. When the track and hold circuit 39 is used, it is necessary to ensure that the oscillator 18 does not fire within 0.3 µS of the start of an interrogation pulse, and this requirement can be met by a bandwidth limitation in, for example, amplifier 17.

It will be appreciated from the description given on the operation of Figures 2 and 5 that the output of the frequency discriminator 28 is driven by the frequency control loop to seek the voltage level stored by the track and hold store 29 or 39, so as to tend to equalise the two input signals present at the amplifier 32 or to produce a difference related to the required frequency off-set value. If the loop gain is not very high, the required signal levels at the two inputs to the amplifier 32 are not achieved and a frequency error will be present in the transmitted frequency response. For example, if the loop gain is 10, then a 100 MHz excursion of the interrogation frequency from the centre frequency will cause only a 90 MHz excursion in the response frequency, thereby leaving an error of 10 MHz. However, this effect may be corrected by inserting attenuation in the feed from the discriminator 28 to amplifier 32. In the example presently under consideration a loss of 0.9 is required. Then a 100 MHz response frequency excursion causes a voltage at the output of the discriminator used in the response phase, which is equivalent to 90 MHz. Thus in principle the frequency control loop provides a 100 MHz correction giving an overall frequency error of zero.

It may be desirable to test the operation of the responder in the absence of an interrogation pulse. This can be arranged by providing a test circuit 45 to inject internally generated narrow pulses at say 1000 pulses per second into the I.F. stage prior to the filter 7. Two frequency controlled oscillators could be provided, each tuned respectively to the intermediate frequency equivalent of the frequency band edges. When the system is to be tested, one of these oscillators is gated into circuit for say 100 nS on the first and second test pulses, whereas the other oscillator is gated on for the third and fourth test pulses, the sequence then being repeated. Inspection of the control signal provided by amplifier 35 to the oscillator 18 will indicate whether a signal level change was present between the first and second test pulses or the third and fourth test pulses. Such changes would indicate that the frequency control loop is not operating correctly.

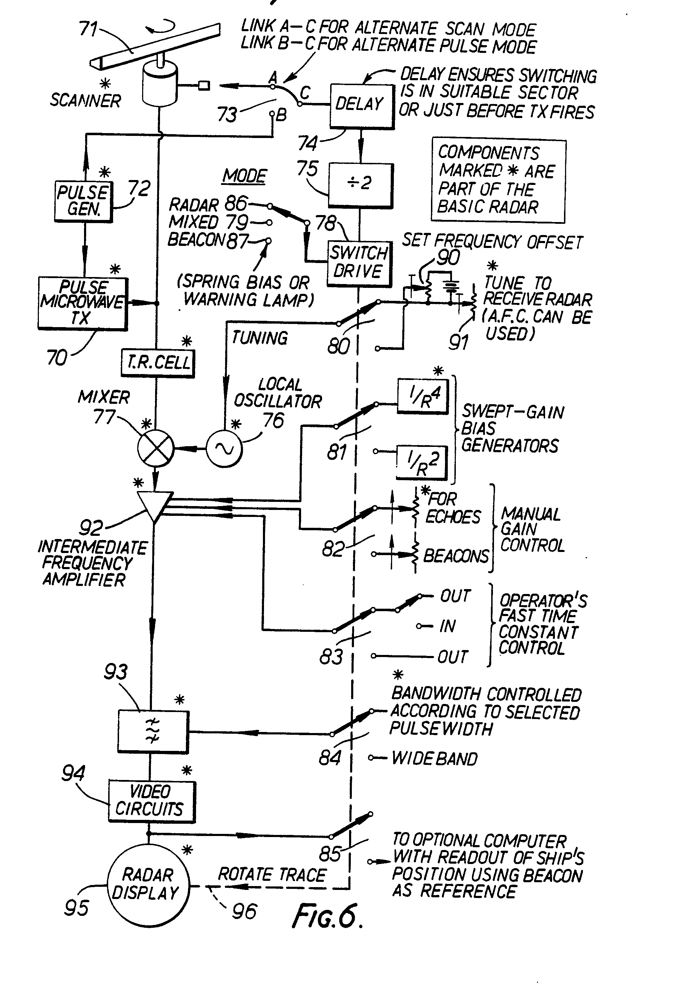

Figure 6 shows only those parts of a primary radar which are necessary for an understanding of the present invention. The transmitter channel is conventional and so is not described in any detail. A pulsed microwave transmitter 70 generates a series of regularly spaced short pulses which are routed to the antenna 71 for transmission. The antenna 71 rotates in azimuth and corresponds to the antenna 53 shown in Figure 1. It is arranged that the receiver channel of the primary radar operates to receive signals at the transmitted frequency alternately with signals transmitted at the off-set beacon frequency of the radar responder. This is essentially achieved by periodically switching the frequency of a local oscillator in the receive channel of the primary radar in a manner described subsequently. The pulsed microwave transmitter 70 is controlled by a pulse generator 72, which generates the output pulses as required. The output of the pulse generator 72 is also fed via a switch 73 and a delay circuit 74 to a divide by two circuit 75. The switch 73 also receives a signal synchronised with the rotation of the scanner 71 and operation of the switch 73 provides that the radar system operates either in the alternate scan mode or the alternate pulse mode referred to previously. The receive frequency is determined by the frequency of the local oscillator 76, the output of which is mixed at a mixer 77 with the signal received at the scanner 71. A conventional TR cell ensures that the transmitted pulses generated at the transmitter 70 are not fed to the mixer 77. In order to receive the off-set frequency generated at the secondary radar responder during alternate scans of the antenna 71, the series of switches 80 to 85 are switched in synchronism with the rotation of the scanner and the divide by two circuit 75 ensures that these switches are in one position on alternate scans and in the other position on the remaining scans. When a switch drive circuit 78 is connected to terminal 79, the radar receiver operates in a mixed mode C. Alternatively, the switch drive circuit 78 can be connected to terminal 86, which ensures that the switches 80 to 85 are held continuously in the positions shown in the drawing, so that only radar echo signals are displayed. The third alternative is when the switch drive circuit 78 is connected to terminal 87 and under this condition the beacon signals only are received continuously. In this case, some provision should be made to warn an operator that this mode is being used or to ensure that the switch drive circuit 78 reverts automatically to one of the other two modes after a short interval of time.

By feeding the output of the pulse generator 72 to the delay circuit 74 via the switch 73, the switches 80 to 85 will be set for alternate pulse mode operation.

The frequency of oscillation of the local oscillator 76 is determined as required by respective tuning circuits 90 and 91, circuit 90 providing the required off-set frequency value and circuit 91 being tuned to the same frequency as the radar transmitter.

The signals received at the radar scanner 71 are mixed to the required intermediate frequency value at the mixer 77 and fed via an intermediate frequency amplifier 92, a band pass filter 93 and video circuits 94 to the radar display 95. The characteristics of the intermediate frequency amplifier 92 are selectable in dependence on the operating mode. Thus, switch 81 enables the swept gain bias characteristic of the amplifier 92 to be selected in accordance with the current receive mode. When echoes are being received a characteristic consistent with the inverse fourth power is used, whereas when responses from a secondary radar responder are being received, the characteristic corresponds to the inverse second power. Additionally, switch 82 provides independent manual gain controls so that echo signals and beacon signals can be independently adjusted. When conventional radar echoes are being received the use of a conventional differentiator or fast time constant control may be needed to break up long responses or blocks of clutter. This is achieved by switch 83, which in the position shown allows an operator to select this function if it is required. However, when switch 83 is in its beacon receive mode, this facility is permanently switched out.

The bandwidth of the bandpass filter 93 is selectable by switch 84, so that its bandwidth can be controlled in the echo mode in accordance with the pulse width of the transmitted pulse. However, in the beacon mode a wide band characteristic is selected. Switch 85 enables the beacon information to be routed to a processor, if desired, so that the ship's position in relation to the beacon can be automatically provided.

The angular position of a beacon in the display 95 is affected by the magnitude of the frequency off-set at which the beacon response differs from the transmitted frequency. This stems from the characteristics of the scanner used. Slotted waveguide antennas are generally used with marine radars, but the electrical axis of said scanner differs from the boresight by an angle which changes with frequency as already described. This effect is often called "differential squint". This angular error can be compensated by rotating the whole display presented on the radar display 95 when the radar is operating in the beacon mode. The necessary control is provided via line 96.

Thus, the radar receiver shown in Figure 6 is capable of displaying beacon information and echo information separately or in combination as required.

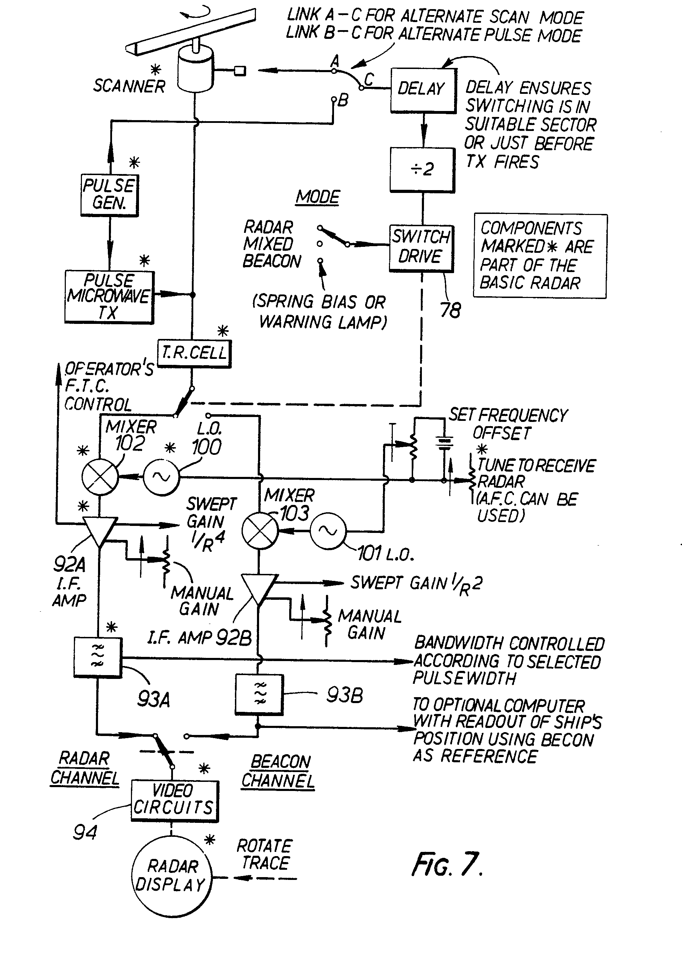

Figure 7 shows an alternative form of radar receiver in which corresponding parts have the same reference numerals. However, it differs from that shown in Figure 6 in that no switchable local oscillator is provided. Instead two separate local oscillators 100 and 101 are provided, each of which feeds a respective mixer 102 and 103. Local oscillator 100 is tuned so as to enable radar echo information to be received, whereas local oscillator 101 is tuned to the off-set frequency of the

0056297

beacon. The switch drive 78 operates to route received echoes to respective ones of the mixers 102 and 103 as required. It is necessary to provide intermediate frequency amplifiers 92a and 92b for each of the two mixer channels. Similarly, bandpass filters 93a and 93b are provided and the outputs of these filters are selected as required by the video circuit 94 under the action of the switch drive circuit 78. In other respects, the receiver is analogous to that shown in Figure 6 and the appropriate inputs to control the characteristics of the intermediate frequency amplifiers 92a and 92b correspond to those shown in Figure 6.

I CLAIM:-

1.    A navigation radar system including a primary radar for transmitting a pulsed radar signal and for receiving echoes therefrom, and for displaying information relating to the received echoes; a secondary radar responder having means for receiving said pulsed radar signal as an interrogation signal, and a responder transmitter for sending a response thereto at a frequency which is related to the frequency of said pulsed radar signal, but which differs therefrom by a frequency off-set; the primary radar also including means for receiving said response and for displaying information relating thereto separately from said information relating to the received echoes.

2.    A secondary radar responder for use in the navigation radar system as claimed in claim 1 and including means for receiving an interrogation pulsed radar signal, and means for transmitting a pulsed response thereto at a frequency which is related to the frequency (which may vary) of said interrogation signal, but which differs therefrom by a frequency off-set.

3.    A responder as claimed in claim 2 and wherein the frequency of said response is controlled so as to differ from the frequency of the interrogation signal by a predetermined frequency off-set value.

4.    A primary radar for use in the navigation radar system as claimed in claim 1 and including means for transmitting a pulsed radar signal and receiving echoes therefrom, and for displaying information relating to the received echoes; the primary radar further including means for receiving a response from a secondary radar responder at a frequency which is off-set from the frequency of the transmitted pulsed radar signal and for displaying information relating to the response separately of said information relating to the received echoes.

5.    A system as claimed in claim 1 and wherein the information relating to the received radar echoes is displayed in spatial registration with the information from the secondary radar responder whether displayed separately or simultaneously.

6.    A system as claimed in claim 1 or 5 and wherein means are provided for selecting for display information relating to the received radar echoes and information from the secondary radar responder, either each alone or both together in spatial registration.

FIG. I.

**Fig. 2A**

FIG. 2B

OUT

WIDE-BAND
TRANSFORMER

WIDE-BAND
TRANSFORMER

IN

MATCHED
DIODES

λ/4

27

NORMAL WORKING
RANGE

OUTPUT VOLTAGE

+

0

−

INPUT
FREQUENCY

λ/4

FIG.3.

FIG.4.

ANTENNA 1

MISMATCH 2

CIRCULATOR 3

TRANSMITTER OSCILLATOR 18

TUNE

ON—OFF

AMPLIFIER 42

DETECTOR 9

THRESHOLD 11

INTEGRATOR

10

38

37

& 

80µS MONO

0·3µS MONO 36

I.F. AMP 26

λ/4 27

FREQ. DISCRIMINATOR 28

LIMITER 25

24

I.F. 8

7

MIXER 6

LOCAL OSCILLATOR 22

ISOLATOR 23

BUFFER 21

ELECTRONIC TUNING VOLTAGE

FIXED—FREQ. OSCILLATOR 43

SWITCH CONTROL 44

TEST 45

FROM OUTPUT OF 80µS MONO (13)

TIMER (10SEC ON, 10 SEC OFF) OPTIONAL FOR INTERROGATION FREQ.

TUNE SWITCH CONTROL 201

Fig.5A

TUNING VOLTAGE FOR INT'N FREQ. RESPONSE (EG 9270 MHz)

TUNING VOLTAGE FOR OFFSET RESPONSE (EG 9320 MHz)

200

Fig. 5B

FIG.6.

Fig. 7.